Europäisches Patentamt

European Patent Office

Office européen des brevets

(11) Veröffentlichungsnummer: **0 399 268 B1**

# EUROPÄISCHE PATENTSCHRIFT

(45) Veröffentlichungstag der Patentschrift: **20.04.94**

(21) Anmeldenummer: **90108526.6**

(22) Anmeldetag: **07.05.90**

(51) Int. Cl.⁵: **B60L 15/00**

(54) **Vorrichtung zum Betreiben eines Magnetfahrzeugs.**

(30) Priorität: **25.05.89 DE 3917058**

(43) Veröffentlichungstag der Anmeldung:
**28.11.90 Patentblatt 90/48**

(45) Bekanntmachung des Hinweises auf die
Patenterteilung:
**20.04.94 Patentblatt 94/16**

(84) Benannte Vertragsstaaten:
**AT CH DE FR GB IT LI SE**

(56) Entgegenhaltungen:
**DE-A- 2 425 940**
**DE-A- 2 932 764**
**DE-A- 3 303 961**

**ELEKTROTECHNISCHE ZEITSCHRIFT - ETZ.**
**vol. 108, no. 9, 1987, BERLIN DE Seiten 378 -**
**381; J. MEINS: "ENERGIEVERSORGUNG DES**
**LANGSTATORANTRIEBS"**

(73) Patentinhaber: **THYSSEN INDUSTRIE AG**
**Am Thyssenhaus 1**
**D-45128 Essen(DE)**

(72) Erfinder: **Augsburger, Friedemann**
**Neusönnerstrasse 18**
**D-8000 München 82(DE)**
Erfinder: **Holzinger, Gerhard**
**Dresdnerstrasse 74**
**D-8000 München 50(DE)**
Erfinder: **Löser, Friedrich, Dr.**
**Asternstrasse 7**
**D-8012 Riemerling(DE)**
Erfinder: **von Kuepach, Hermann**
**Eichengrube 18**
**D-8300 Landshut(DE)**

(74) Vertreter: **Freiherr von Schorlemer, Reinfried,**
**Dipl.-Phys.**
**Patentanwalt**
**Brüder-Grimm-Platz 4**
**D-34117 Kassel (DE)**

# Beschreibung

Die Erfindung betrifft eine Vorrichtung der im Oberbegriff des Anspruchs 1 angegebenen Gattung.

Bei Vorrichtungen dieser Art sind die entlang der Trasse verlegten Langstatorwicklungen in viele kurze, z.B. ca. einen Kilometer lange und unmittelbar aufeinanderfolgende Wicklungsabschnitte geteilt, von denen jeweils nur derjenige Wicklungsabschnitt über eine zugeordnete Schalteinrichtung mit einem vergleichsweise langen, z.B. ca. 30 km langen Streckenkabel verbunden ist, der zu irgendeinem Zeitpunkt vom Fahrzeug befahren wird (DE-PS 24 25 940). Das Streckenkabel ist an ein Unterwerk angeschlossen, in dem die zur Einspeisung des Stroms erforderlichen Wechselrichter od. dgl. installiert sind. Um eine Verringerung der auf das Fahrzeug wirkenden Schubkraft während des Überwechselns von einem Wicklungsabschnitt auf den in Fahrtrichtung folgenden Wicklungsabschnitt zu vermeiden, sieht das sog. Bocksprung-Verfahren vor, zwei Streckenkabel zu verwenden, die aufeinanderfolgenden Wicklungsabschnitte abwechselnd an das eine oder andere Streckenkabel anzuschließen und während der Wechselphase beiden beteiligten Wicklungsabschnitten Strom zuzuführen.

Dies erfordert allerdings die Anwendung von zwei unabhängigen Streckenkabeln und diesen zugeordneten Unterwerken. Ist auf beiden Seiten des Fahrzeugs je eine Langstatorwicklung vorgesehen, gilt im Prinzip dasselbe, wobei die Wicklungsabschnitte beider Seiten jeweils in Serie geschaltet sind und jeweils gemeinsam an dasselbe Streckenkabel angeschlossen werden. Im übrigen ist längs der Gesamttrasse eine Vielzahl derartiger Anordnungen aufeinanderfolgend angeordnet.

Zur Reduzierung der in den Streckenkabeln auftretenden Spannungsabfälle und zur Ermöglichung eines Notbetriebs mit reduzierter Leistung beim Ausfallen eines Wechselrichters od. dgl. sieht eine bekannte Vorrichtung der eingangs bezeichneten Gattung (DE-OS 29 32 764) jeweils zwei, mit den Enden der Streckenkabel verbundene Unterwerkshälften vor, wobei jede Unterwerkshälfte die Hälfte desjenigen Stroms liefert, der zur Erzeugung der jeweils gewünschten Schubkraft erforderlich ist. Dabei wird jede Unterwerkshälfte für jeweils zwei aufeinanderfolgende Streckenkabel benutzt und mit weiteren Schalteinrichtungen auf dasjenige Streckenkabel umgeschaltet, in dessen Bereich sich gerade das Fahrzeug befindet. Dieses sog. Doppelspeisung-Verfahren kann mit dem Bocksprung-Verfahren kombiniert werden.

Alternativ ist weiter bereits bekannt (Elektrotechnische Zeitschrift etz, Band 108, 1987, Heft 9, Seiten 378 bis 381), das Doppelspeisung-Verfahren mit einem sog. Wechselschritt-Verfahren zu kombinieren. Dieses beruht auf der getrennten Speisung jeder Langstatorseite eines zweiseitig bewickelten Langstatormotors mit Hilfe von zwei voneinander unabhängigen Unterwerkshälften und auf dem räumlichen Versatz der Wicklungsabschnitte der rechten bzw. linken Langstatorseite um wenigstens eine Fahrzeuglänge. Dadurch ist gegenüber dem Bocksprung-Verfahren eine Reduzierung der in den Unterwerken zu installierenden Leistung bei sonst gleichen Bedingungen möglich.

Allen genannten Vorrichtungen ist gemeinsam, daß sie hinsichtlich der in den Streckenkabeln auftretenden Verlustleistungen, der Zahl der in jedem Trassenteil zu verlegenden Wicklungsabschnitte, der Ausnutzung der in den Unterwerken installierten Leistungen usw. nicht optimal arbeiten. Insbesondere wird als Nachteil empfunden, daß die in den Unterwerken installierten Leistungen nur immer dann voll ausgenutzt werden können, wenn gerade ein Wicklungsabschnitt befahren wird, dessen Abstand von einem der beteiligten Unterwerke am größten ist.

Der Erfindung liegt die Aufgabe zugrunde, hier Abhilfe zu schaffen und die Vorrichtung der eingangs bezeichneten Gattung so zu verbessern, daß die Verlustleistungen kleiner sind, bei gegebener installierter Leistung weniger Wicklungsabschnitte und Schalteinrichtungen benötigt werden und die installierten Leistungen über das ganze Trassenteil hinweg wesentlich gleichförmiger ausgenutzt werden können, als dies bisher möglich ist.

Zur Lösung dieser Aufgabe dienen die kennzeichnenden Merkmale des Anspruchs 1.

Weitere vorteilhafte Merkmale der Erfindung ergeben sich aus den Unteransprüchen.

Die Erfindung wird nachfolgend in Verbindung mit der beiliegenden Zeichnung an Ausführungsbeispielen näher erläutert. Es zeigen:

Fig. 1 einen schematischen Querschnitt durch ein Magnetschwebefahrzeug und dessen Fahrweg;

Fig. 2 schematisch eine erfindungsgemäße Vorrichtung zum Betreiben des Magnetschwebefahrzeugs nach Fig. 1;

Fig. 3 ein Ersatzschaltbild für einen synchronen Langstatormotor der Vorrichtung nach Fig. 2;

Fig. 4 ein Vektordiagramm für den Langstatormotor nach Fig. 3;

Fig. 5 einen Stromaufteilungsblock der Vorrichtung nach Fig. 2;

Fig. 6 ein Schaubild für eine bevorzugte erfindungsgemäße Stromaufteilung bei Anwendung der Vorrichtung nach Fig. 2;

Fig. 7 ein Schaubild betreffend die bei Anwendung der Stromaufteilung nach Fig. 6 auftretenden Verlustleistungen;

Fig. 8 ein Schaubild betreffend den Spannungsbedarf bei Anwendung der Stromaufteilung nach Fig. 6;

Fig. 9 ein Schaubild betreffend die erfindungsgemäße Längenaufteilung für die einzelnen Wicklungsabschnitte des in der Vorrichtung nach Fig. 2 verwendeten Langstatormotors;

Fig. 10 in stark vereinfachter Darstellung eine Unterwerkshälfte mit einem am Ausgang vorgesehenen Transformator; und

Fig. 11 die Abhängigkeit des Ausgangsstroms der Unterwerkshälfte nach Fig. 10 von der Spannung bzw. Geschwindigkeit des Magnetschwebefahrzeugs bei unterschiedlichen Übersetzungsverhältnissen des Transformators.

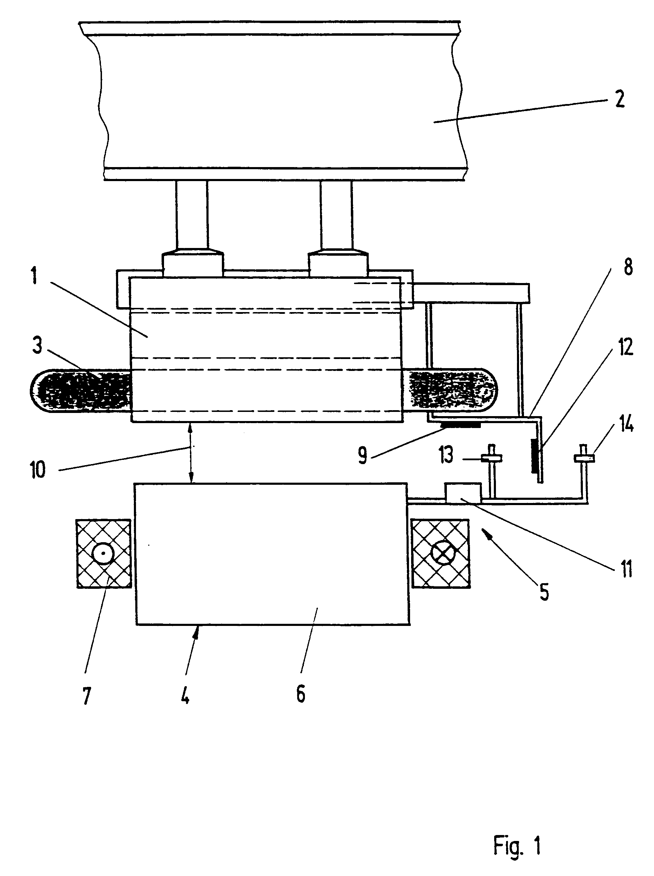

Bei einer Magnetschwebebahn mit synchronem Langstator (Fig. 1) ist ein Statorblechpaket 1 ortsfest mit einem längs einer vorgegebenen Trasse errichteten Fahrweg 2 verbunden. In die Nuten des Statorblechpakets 1 ist eine Langstatorwicklung 3 in Form einer Drehstromwicklung eingelegt, die von einem Wechselrichter mit Drehstrom variabler Amplitude und Frequenz gespeist wird, wodurch sich in bekannter Weise eine fortschreitende Strombelagswelle längs des Langstatormotors ausbildet. Das Erregerfeld der Langstator-Synchronmaschine wird durch Tragmagnete 4 erzeugt, die mit einem längs der Trasse bewegten, in Fig. 1 nur schematisch angedeuteten Fahrzeug 5 verbunden sind und aus je einem Magnetkern 6 und einer Erregerwicklung 7 bestehen. Neben der Funktion des magnetischen Tragens stellen die Tragmagnete 4 gleichzeitig das Erregerfeld der Synchronmaschine bereit. In der Regel ist auf beiden Seiten des Fahrwegs 2 je ein Statorblechpaket 1 mit der zugehörigen Langstatorwicklung 3 und zu beiden Seiten des Fahrzeugs 5 eine Mehrzahl von Tragmagneten 4 vorgesehen.

Zur Ausbildung der gewünschten Vortriebskraft ist es erforderlich, daß die Fahrzeuggeschwindigkeit synchron zur Ausbreitungsgeschwindigkeit der Strombelagswelle ist. Die maximale Vortriebs- bzw. Schubkraft ergibt sich bei vorgegebener Amplitude der Grundschwingungs-Wanderwelle, wenn eine optimale relative Lage des Fahrzeug-Erregerfeldes zur Wandlerwelle eingehalten wird, was bei einem Synchron-Drehstrommotor der Einhaltung des optimalen Polradwinkels entsprechen würde. Dies wird durch Frequenzregelung des Wechselrichters erreicht, wobei die momentane Fahrzeuggeschwindigkeit und die relative Lage der Tragmagnete 4 z.B. zur Phase R der Langstatorwicklung 3 als Bezugsgrößen verwendet werden.

Zur Ermittlung dieser Bezugsgrößen kann z.B. längs des Statorblechpakets 1 eine Meßleiste 8 angebracht sein, die in einem unveränderlichen Abstand zur Zahnoberfläche des Statorblechpakets 1 fixiert ist und in Ausbreitungsrichtung der Strombelagswelle eine feste Zuordnung zur Langstatorwicklung 3 besitzt. Auf diese Meßleiste 8 ist ein durchgehender Metallbelag 9 aufgebracht, der als Meßfläche zur Erfassung des Tragspalts 10 mittels eines Sensors 11 dient, der in definierter Lage zur Poloberfläche des Magnetkerns 6 montiert ist. Außerdem ist an der Meßleiste 8 eine weitere metallische Meßfläche 12 angebracht, die in Ausbreitungsrichtung der Strombelagswelle Unterbrechungen aufweist, die in fester Zuordnung zur Langstatorwicklung 3 angebracht sind und einen digitalen Informationsträger für die relative Pollage und die absolute Fahrzeuglage bilden. Die auf der Meßfläche 12 gespeicherte Information wird mit am Fahrzeug 5 vorgesehenen Sende- und Empfängerspulen 13 bzw. 14 erfaßt, ausgewertet und zu Signalen verarbeitet, die die Pollage, die absolute Fahrzeuglage und die Fahrzeuggeschwindigkeit anzeigen. Diese Signale werden zusammen mit den die Größe des Tragspalts 10 angebenden Signalen beispielsweise per Funk an die Unterwerkshälfte oder ein zentrales Leitwerk übermittelt.

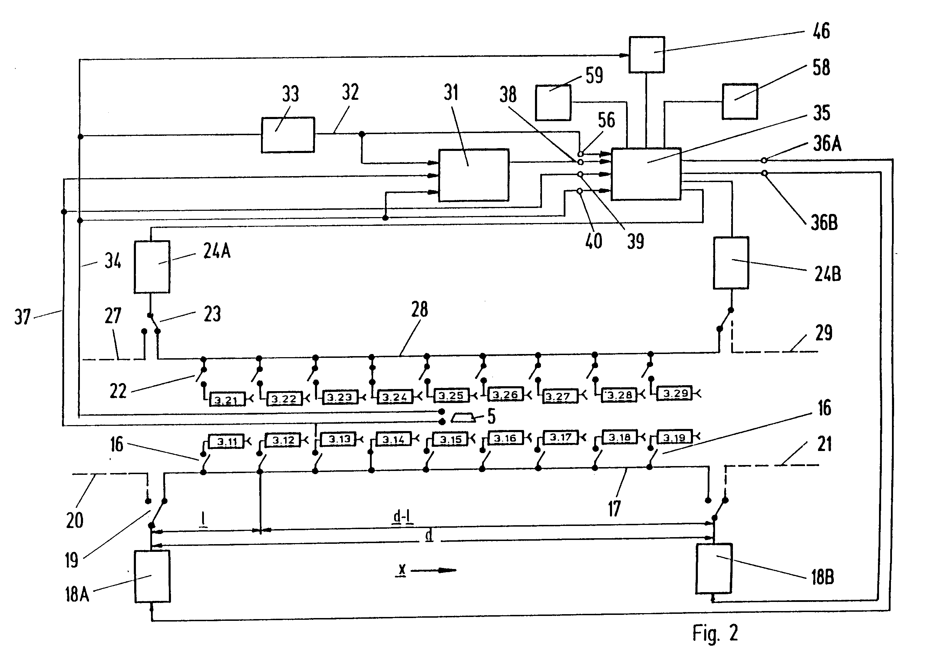

Zur Minimierung des Bedarfs an Blindleistung und Spannung des Langstatormotors wird jeweils nur dasjenige Teilstück der Langstatorwicklung 3 aktiviert (Fig. 2), das gerade von dem z.B. in Richtung eines Pfeils x bewegten Fahrzeug 5 befahren wird. Hierzu ist die Langstatorwicklung 3, wie Fig. 2 nur schematisch zeigt, in eine Vielzahl von in Längsrichtung einer Trasse unmittelbar aufeinanderfolgende Wicklungsabschnitte 3.11 bis 3.19 unterteilt, die über je eine zugeordnete Schalteinrichtung 16 an ein Streckenkabel 17 angeschlossen werden können. In Fig. 2 trifft dies gerade für den Wicklungsabschnitt 3.14 zu. Die Enden des Streckenkabels 17 sind an je eine Unterwerkshälfte 18A bzw. 18B angeschlossen, in denen die zur Einspeisung des Stroms in die Wicklungsabschnitte 3.11 bis 3.19 erforderlichen Einrichtungen, insbesondere Wechselrichter od. dgl. installiert sind. Die Unterwerkshälften 18A,B können mittels weiterer Schalteinrichtungen 19 an je ein weiteres längs der Trasse verlegtes Streckenkabel 20 bzw. 21 angeschlossen sein bzw. werden, wenn das Fahrzeug 5 noch nicht in das von den Unterwerkshälften 18A,B bzw. dem Streckenkabel 17 definierte Trassenteil eingefahren ist bzw. dieses verläßt.

Tatsächlich besteht die Langstatorwicklung 3 außerdem nicht nur aus den Wicklungsabschnitten 3.11-3.19, sondern auch aus weiteren entsprechenden Wicklungsabschnitten, die jeweils mit den Wicklungsabschnitten 3.11-3.19 in Sternschaltung verbunden sind, um das übliche Drehstromsystem mit den Phasen R,S und T zu erhalten. Da diese zusätzlichen Wicklungsabschnitte zum Verständnis der Erfindung nicht erforderlich sind, wurden sie in Fig. 2 zur Vereinfachung der Darstellung nicht eingezeichnet.

Die in Fig. 2 dargestellten Wicklungsabschnitte 3.11-3.19 dienen in der Regel nur zum Antrieb einer, z.B. der rechten Seite des Fahrzeugs 5. Entsprechende Wicklungsabschnitte 3.21-3.29, Schalteinrichtungen 22 und 23, Unterwerkshälften 24A,B und Streckenkabel 27,28 und 29 dienen zum Antrieb der linken Fahrzeugseite in entsprechender Weise. Dabei sind die Wicklungsabschnitte 3.11-3.19, wie in Fig. 2 schematisch angedeutet ist, zu den Wicklungsabschnitten 3.21-3.29 jeweils um wenigstens eine Fahrzeuglänge in $\underline{x}$-Richtung versetzt, um die Anwendung des sog. Wechselschritt-Verfahrens zu ermöglichen. Dieses besteht darin, daß die Schalteinrichtung 16 bzw. 22 immer dann betätigt wird, wenn sich eine Trennstelle zwischen zwei Wicklungsabschnitten etwa in der Fahrzeugmitte befindet. In der Praxis sind außerdem die sich entsprechenden Unterwerkshälften 18A, 24A bzw. 18B, 24B jeweils zu einem an der Trasse angeordneten Unterwerk zusammengefaßt.

Vorrichtungen der beschriebenen Art und ihre Funktion sind allgemein bekannt (DE-OS'en 29 32 764 und 33 03 961, Elektrotechnische Zeitschrift etz, Band 108, 1987, Heft 9, S. 378 bis 381) und brauchen daher nicht näher erläutert werden.

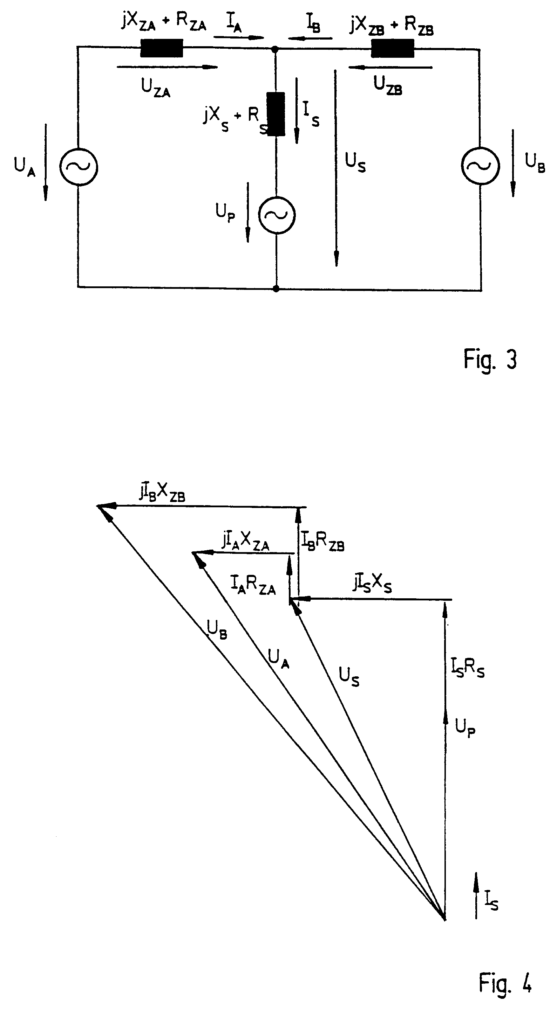

In Fig. 3 ist das Ersatzschaltbild für einen gerade eingeschalteten Wicklungsabschnitt 3.11-3.19 bzw. 3.21-3.29 dargestellt. Der für den Nominalbetrieb des Fahrzeugs 5 in diesem Wicklungsabschnitt benötigte und für die gewünschte Nenngeschwindigkeit maßgebliche Strom ist mit $I_S$ und die von der momentanen Geschwindigkeit des Fahrzeugs 5 abhängige Polradspannung ist mit $U_P$ bezeichnet. $R_S$ und $jX_S$ bezeichnen den Wirk- bzw. Blindwiderstand des Wicklungsabschnitts zwischen dem jeweiligen Anschlußort an das Streckenkabel 17 und dem Sternpunkt. Die Unterwerkshälfte 18A speist den Teilstrom $I_A$ ein und muß dazu eine Spannung $U_A$ liefern, die um soviel größer als die Polradspannung $U_P$ ist, als der Summe aus dem durch den Teilstrom $I_A$ in dem zugehörigen Teil des Streckenkabels 17 auftretenden, auf dessen Wirk- und Blindwiderstand $R_{ZA}$ und $jX_{ZA}$ zurückzuführenden Spannungsabfall $U_{ZA}$ und dem durch den Wirk- bzw. Blindwiderstand $R_S$ und $jX_S$ bedingten Spannungsabfall am Wicklungsabschnitt entspricht. Dabei gelten die Werte $R_{ZA}$, $jX_{ZA}$ jeweils für die vom Ausgang der Unterwerkshälfte 18A bis zum Anschlußort des jeweiligen Wicklungsabschnitts erstreckten Teile der Zuleitung bzw. des Streckenkabels 17. Die sich ergebenden Spannungen sind anhand des üblichen Vektordiagramms in Fig. 4 dargestellt. Entsprechendes gilt für die von der Unterwerkshälfte 18B aufzubringenden Spannungen und Teilströme $U_B$ bzw. $I_B$.

Bei der bekannten Vorrichtung betragen die Teilströme $I_A$ = $I_B$ jeweils $0,5 \cdot I_S$. Erfindungsgemäß wird dagegen vorgeschlagen, eine Stromaufteilung zu wählen, die vom Ort $\underline{x}$ des jeweils gespeisten Wicklungsabschnitts längs des durch die Unterwerkshälften 18A,B bzw. 24A,B definierten Trassenteils abhängig ist. Eine besonders günstige Stromaufteilung wird erhalten, wenn beim Anschluß irgendeines Wicklungsabschnitts, z.B. 3.14, der Teilstrom $I_A$, der von der näher gelegenen Unterwerkshälfte, hier z.B. 18A, geliefert wird, größer ist als derjenige Teilstrom $I_B$, der von der ferner liegenden Unterwerkshälfte, hier 18B geliefert wird. Optimale Verhältnisse ergeben sich, wenn die beiden Teilströme der Formel $I = (1-\ell/d)I_S$ genügen, worin $\underline{\ell}$ der aus Fig. 2 ersichtliche Abstand des betreffenden Wicklungsabschnitts (z.B. 3.14) von der jeweils betrachteten Unterwerkshälfte 18A,B und $\underline{d}$ der Abstand zwischen den beiden Unterwerkshälften 18A,B bzw. die Gesamtlänge des Streckenkabels 17 sind. Genau genommen ist $\underline{\ell}$ die Länge desjenigen Teils des Streckenkabels 17, das vom Ausgang der jeweiligen Unterwerkshälfte 18A,B zu dem Ort führt, an dem der jeweilige Wicklungsabschnitt 3.11 bis 3.19 an das Streckenkabel 17 angeschlossen ist, und $\underline{d}$ die Gesamtlänge des Streckenkabels 17 zwischen den beiden Ausgängen der Unterwerkshälften 18A,B. Nachfolgend wird vereinfacht meistens nur vom jeweiligen Ort des betreffenden Wicklungsabschnitts in Richtung $\underline{x}$ gesprochen. Ist $\ell/d$ an der Einspeisungsstelle für den Wicklungsabschnitt 3.14, bezogen auf die Unterwerkshälfte 18A, beispielsweise 0.3 und infolgedessen 0.7 mit Bezug auf die Unterwerkshälfte 18B, dann würde daraus für $I_A$ ein Wert von $0.7 \cdot I_S$ und für $I_B$ ein Wert von $0.3 \cdot I_S$ resultieren. Sind die Wirk- und Blindwiderstände des Streckenkabels 17 proportional zu dessen Länge, was in der Regel der Fall ist, dann folgt daraus, daß der Spannungsabfall $U_{ZA}$ (Fig. 3 und 4) längs des zur Unterwerkshälfte 18A führenden Teils des Streckenkabels 17 gleich dem Spannungsabfall $U_{ZB}$ längs des zur Unterwerkshälfte 18B führenden Teils des Streckenkabels 17 ist. Für alle anderen Wicklungsabschnitte ergibt sich ebenfalls stets $U_{ZA} = U_{ZB}$ mit der besonderen Eigenschaft, daß die Teilströme für einen an die Mitte des Streckenkabels 17 angeschlossenen Wicklungsabschnitt, z.B. 3.15, $I_A$ = $I_B$ = $0.5 \cdot I_S$ wären. Daraus folgt, daß für alle Wicklungsabschnitte $U_A$ = $U_B$ ist.

Die Anwendung der angegebenen Formel hat zur Folge, daß die beim Einspeisen der Teilströme in irgendeinen Wicklungsabschnitt 3.11 bis 3.19 vom Streckenkabel 17 verbrauchte Verlustleistung stets die kleinste Verlustleistung ist, die bei den gegebenen Nominalbedingungen erreicht werden kann. Daraus ergibt sich eine Verminderung des Gesamtenergieverbrauchs. Außer diesem Vorteil der reduzierten Verlustleistung ergibt sich, daß die jeweils ferner liegende Unterwerkshälfte im Vergleich zu einer symmetrischen Einspeisung mit $I_A$ = $I_B$ = $0.5 \cdot I_S$ eine erheblich reduzierte Maximalspannung aufweisen kann.

Die beschriebene Stromaufteilung wird erfindungsgemäß mit der aus Fig. 2 ersichtlichen Vorrichtung erzielt. Diese enthält einen Geschwindigkeitsregler 31, dem über eine Leitung 32 ein Sollwert für die jeweils zu erzielende bzw. einzuhaltende Geschwindigkeit des Fahrzeugs 5 zugeführt wird. Diese Sollwerte sind in einem Sollwert-Speicher 33 abgelegt, dem über eine schematisch dargestellte Leitung 34 das vom Fahrzeug 5 per Funk übermittelte Ortssignal zugeführt wird und der einen für den jeweils befahrenen Wicklungsabschnitt vorgegebenen Geschwindigkeits-Sollwert abgibt.

Der Regler 31 liefert ein zur Erzielung der vorgegebenen Geschwindigkeit geeignetes Sollsignal für den Strom $I_S$, das einem Stromaufteilungsblock 35 zugeführt wird, dem über die Leitung 34 auch die Ortssignale zugeführt werden. Der Stromaufteilungsblock 35 liefert an einem Ausgang 36A ein Signal, welches die Unterwerkshälfte 18A auf die zur Erzielung des Stroms $I_A$ erforderliche Spannung $U_A$ einstellt, und an einem Ausgang 36B ein entsprechendes Signal für die Unterwerkshälfte 18B. Weitere Ausgänge liefern entsprechende Signale für die Unterwerkshälften 24A,B. Mittels des am Fahrzeug 5 ermittelten Geschwindigkeit-Istsignals, das in einer Leitung 37 erscheint, überprüft der Geschwindigkeitsregler 31 die Einhaltung der vorgeschriebenen Sollgeschwindigkeit. Dasselbe Geschwindigkeit-Istsignal wird auch dem Stromaufteilungsblock 35 zugeführt.

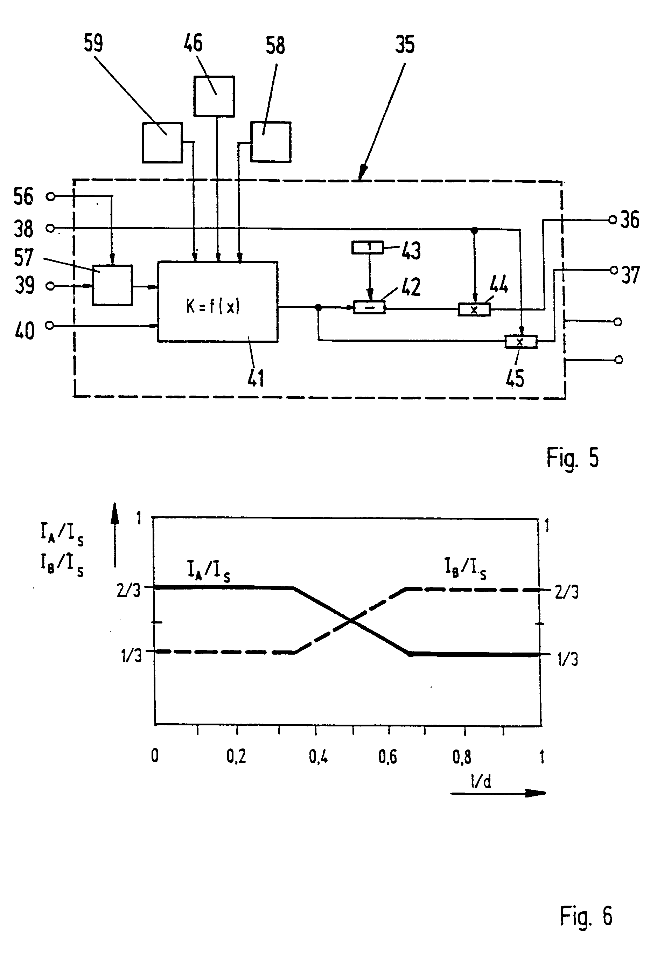

In Fig. 5 sind Einzelheiten des Stromaufteilungsblocks 35 dargestellt, der Eingänge 38,39 bzw. 40 aufweist, die entsprechend Fig. 2 mit dem Geschwindigkeitsregler 31 bzw. den Leitungen 37 und 34 verbunden sind. Der Eingang 40 führt zu einem Block 41, in dem eine für den Normalbetrieb gültige, vom Ort des jeweils befahrenen Wicklungsabschnitts abhängige und die Stromaufteilung bestimmende Funktion K = f (x) gespeichert ist. Diese Funktion K ist im Ausführungsbeispiel K = $\ell$/d, worin $\underline{\ell}$ und $\underline{d}$ die oben angegebenen Bedeutungen haben. Ein vom Ort abhängiges Signal entsprechend dem Wert l/d, bezogen z.B. auf die in Fig. 2 linke Unterwerkshälfte 18A, wird am Ausgang des Blocks 41 abgegeben und in einer Subtraktionsstufe 42 von einem dem Wert "1" entsprechenden und in einem Block 43 gespeicherten Signal subtrahiert, so daß sich ein Signal entsprechend dem Wert (1- $\ell$/d) ergibt. Dieses Signal wird in einer Multiplizierstufe 44 mit dem vom Eingang 38 gelieferten, dem Wert $I_S$ entsprechenden Signal multipliziert und am Ausgang 36A bereitgestellt. Außerdem wird das dem Wert K = $\ell$/d entsprechende Signal in einer weiteren Multiplizierstufe 45 direkt mit dem Signal $I_S$ multipliziert und am Ausgang 36B bereitgestellt. Damit gibt der Ausgang 36A beispielsweise stets ein Signal entsprechend (1- l/d) für die Unterwerkshälfte 18A und der Ausgang 36B stets ein Signal entsprechend dem Wert l/d für die Unterwerkshälfte 18B ab. Entsprechende Signale können für die Unterwerkshälften 24A,B erzeugt werden.

In einem weiteren Block 46 (Fig. 2 und 5), der ebenfalls mit der Leitung 34 verbunden ist, sind die Daten der gesamten Trasse gespeichert. Durch ihn wird dem Stromaufteilungsblock 35 z.B. mitgeteilt, daß die Unterwerkshälfte 18B, wenn das Fahrzeug 5 in das nächste Trassenteil (z.B. entsprechend dem Streckenkabel 21) einfährt, mit dem Ausgang 36A verbunden werden muß, weil sie in diesem Moment eine dem nächsten Wicklungsabschnitt nahe Unterwerkshälfte ist, der Ausgang 36B aber ein auf eine fern liegende Unterwerkshälfte bezogenes Ausgangssignal liefern würde. Alternativ kann die Funktion K = f(x) einzeln für jedes Trassenteil so in einer Tabelle od. dgl. abgelegt sein, daß beim Wechsel des Fahrzeugs 5 auf ein anderes Trassenteil automatisch die richtigen Signale an den Ausgängen 36A,B erscheinen.

Die Anwendung der Formel I = (1-$\ell$/d)$I_S$ längs des gesamten in Fig. 2 dargestellten Trassenteils würde dazu führen, daß bei der Speisung eines einer Unterwerkshälfte nahen Wicklungsabschnitts (z.B. 3.11 oder 3.19) praktisch der Gesamtstrom $I_S$ von einer Unterwerkshälfte aufgebracht werden müßte. Dies ist nicht immer erwünscht, weil auch im Hinblick auf die Teilströme $I_A$ und $I_B$ möglichst geringe Schwankungen und Maximalströme bevorzugt werden. Erfindungsgemäß wird daher weiter vorgeschlagen, die Teilströme $I_A$, $I_B$ nur in einem mittleren Bereich der jeweiligen Trassenteile nach der Formel I = (1-$\ell$/d)$I_S$ zu berechnen, in den beiden übrigen Bereichen dagegen konstante Teilströme vorzusehen, die kleiner als $I_S$ sind und bei denen das Verhältnis des von der näher gelegenen Unterwerkshälfte gelieferten Teilstroms zu dem von der ferner gelegenen Unterwerkshälfte gelieferten Teilstrom größer als "1" ist.

Vorzugsweise wird die Stromaufteilung entsprechend Fig. 6 gewählt. Hierbei ist das Maß $\underline{d}$ wiederum die Gesamtlänge des Streckenkabels 17. Dagegen ist $\underline{\ell}$ die Länge des für die Einspeisung benutzten Teils des Streckenkabels 17, bezogen auf die in Fig. 2 linke Unterwerkshälfte 18A, so daß d-$\underline{\ell}$ die entsprechende Länge, aber bezogen auf die in Fig. 2 rechte Unterwerkshälfte 18B ist. Der von der Unterwerkshälfte 18A gelieferte Teilstrom $I_A$ entspricht dabei konstant dem Wert 2/3 · $I_s$, solange diese eine nahe gelegene Unterwerkshälfte und daher z.B. $\ell$/d gleich oder kleiner als 1/3 ist, was in Fig. 2 etwa für die Wicklungsabschnitte 3.11-3.13 zutreffen würde. Dagegen liefert in diesem Bereich die ferner liegende Unterwerkshälfte 18B nur einen Teilstrom $I_B$ = 1/3 ·$I_s$. Im mittleren Bereich des Trassenabschnitts folgen beide Teilströme $I_A$ und $I_B$ der Formel (1-$\ell$/d)$I_S$, was in Fig. 2 etwa für die Wicklungsabschnitte 3.14-3.16 zutreffen würde. In dem von den Wicklungsabschnitten 3.17-3.19 eingenommenen Bereich des Trassenteils liefert schließlich die ferner gelegene Unterwerkshälfte 18B einen konstanten Teilstrom $I_B$ = 2/3 · $I_s$. Dadurch ist das Verhältnis des von der näher liegenden Unterwerkshälfte gelieferten Teilstroms zu dem von der ferner liegenden Unterwerkshälfte gelieferten Teilstrom hier 2:1.

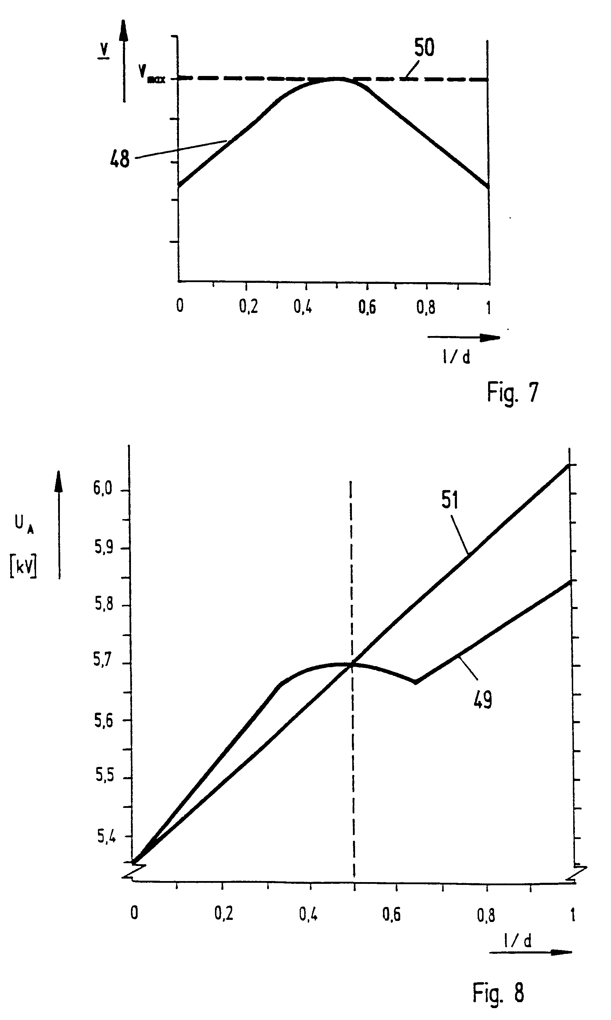

Durch die vorgeschlagene Stromaufteilung werden die hinsichtlich der Verlustleistung im Streckenkabel 17 und hinsichtlich der reduzierten Maximalspannung in den Unterwerkshälften 18A,B erzielten Vorteile teilweise zunichte gemacht. Allerdings ergibt sich der zusätzliche Vorteil, daß die zu liefernden Teilströme $I_A$, $I_B$ auf den Wert 2/3 $I_s$ begrenzt sind. Die insgesamt noch erzielte Verringerung der Verlustleistung $V$ ergibt sich aus der Linie 48 in Fig. 7, die insgesamt erzielte Reduzierung der Maximalspannung aus der Linie 49 in Fig. 8, jeweils bezogen auf die symmetrische Stromaufteilung mit $I_A$ = $I_B$ = 0.5·$I_S$ entsprechend Linien 50 bzw. 51 bei sonst gleichen Verhältnissen. Dabei ist in Fig. 7 die Verlustleistung $V$, in Fig. 8 die maximal an der Unterwerkshälfte 18A benötigte Spannung $U_A$ jeweils gegen $l$/d aufgetragen, wobei $l$ der Abstand des jeweils betreffenden Wicklungsabschnitts von der Unterwerkshälfte 18A ist. Für die Spannung $U_B$ der rechten Unterwerkshälfte 18B ergibt sich ein der Linie 49 entsprechender Verlauf in Abhängigkeit vom Ort des jeweiligen Wicklungsabschnitts.

Die für die jeweils fern liegende Unterwerkshälfte kleineren Maximalspannungen, z.B. 5.84 kV anstatt 6.05 kV, werden erfindungsgemäß dazu genutzt, die einzelnen Wicklungsabschnitte 3.11-3.19 bzw. 3.21-3.29 in Richtung $x$ entsprechend zu verlängern. Dadurch werden pro Trassenteil weniger Wicklungsabschnitte und entsprechend weniger Schalteinrichtungen 16 bzw. 22 benötigt, was bei langen Trassen zu einer erheblichen Kosteneinsparung führt.

Nach einer derzeit als am besten empfundenen Ausführungsform der Erfindung werden die Längen zumindest derjenigen Wicklungsabschnitte (z.B. 3.11-3.13 und 3.17-3.19) in besonderer Weise optimiert, die außerhalb des mittleren Bereichs des Trassenteils angeordnet sind. Hierzu wird die Länge jedes dieser Wick - lungsabschnitte so bemessen, daß die Summe aus der für ihn vorgesehenen, nominalen Polradspannung, dem Spannungsabfall, der an seinen Wirk- und Blindwiderständen $jX_S$ und $R_S$ auftritt, und demjenigen Spannungsabfall, der an den Wirk- und Blindwiderständen $R_Z$ und $jX_Z$ des von ihm zur ferner liegenden Unterwerkshälfte führenden Teils des Streckenkabels 17 auftritt, konstant und unabhängig vom Ort $x$ des betrachteten Wicklungsabschnitts ist. Das bedeutet am Beispiel der Unterwerkshälfte 18A in Fig. 2, daß die Längen der Wicklungsabschnitte 3.17-3.19 und vorzugsweise auch die der Wicklungsabschnitte 3.14 bis 3.16 so bemessen sind, daß zur Erzeugung der für diese Wicklungsabschnitte benötigten Teilströme $I_A$ jeweils dieselbe Spannung $U_A$ verwendet werden kann, während zur Einspeisung der Ströme $I_A$ in die Wicklungsabschnitte 3.11-3.13 jeweils etwas geringere Spannungen $U_A$ ausreichen. Entsprechendes gilt für die Unterwerkshälfte 18B, die die Teilströme $I_B$ an die Wicklungsabschnitte 3.11-3.16 mit im wesentlichen denselben Maximalspannungen $U_B$ liefern kann. Dadurch wird eine optimale Ausnutzung der in den Unterwerkshälften installierten Maximalspannungen und Maximalströme erreicht.

Streng genommen ist die oben genannte Summe innerhalb eines Wicklungsabschnitts immer nur dann konstant, wenn auch die Fahrzeuggeschwindigkeit bzw. die Polradspannung $U_P$ konstant ist. Trifft dies nicht zu, gilt die oben genannte Summe für die höchste Polradspannung, die im jeweiligen Wicklungsabschnitt bei Nominalbedingungen auftritt.

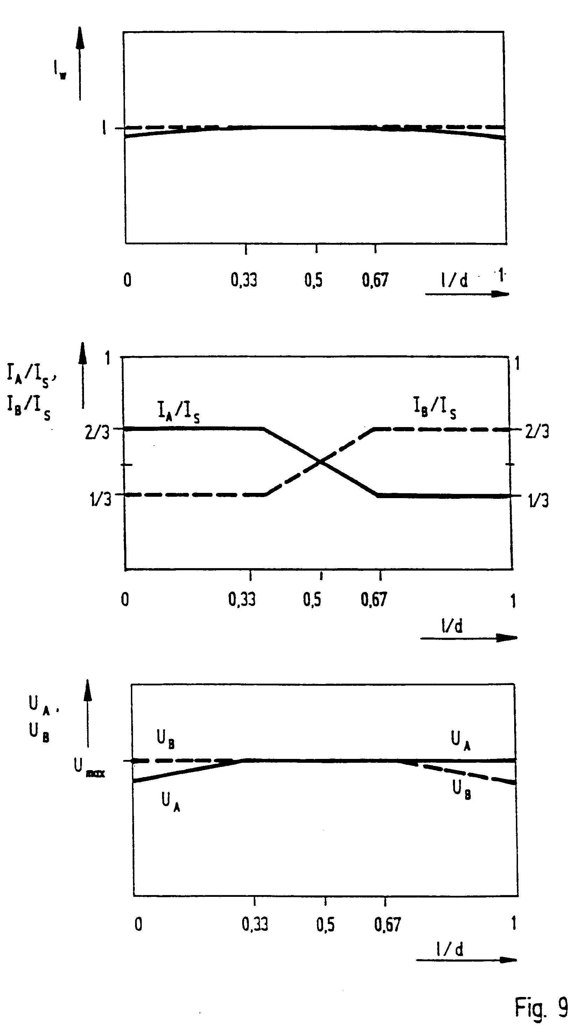

In Fig. 9 ist die unterschiedliche Bemessung der Längen der verschiedenen Wicklungsabschnitte 3.11-3.19 rein schematisch für eine gleichbleibende Betriebssituation entsprechend den Nominalbedingungen, d.h. für eine Fahrt mit konstanter Geschwindigkeit und konstantem Strom $I_S$ dargestellt. Die tatsächlich herzustellenden Längen $l_W$ sind durch eine Optimierungsrechnung zu bestimmen. Gleichzeitig zeigt Fig. 9 die zugehörigen Teilströme $I_A$, $I_B$ und Teilspannungen $U_A$, $U_B$ in Abhängigkeit vom Abstand $l$/d des jeweiligen Wicklungsabschnitts von der in Fig. 2 linken Unterwerkshälfte 18A.

Die in den Unterwerkshälften 18A,B bzw. 24A,B installierten Wechselrichter 53 sind normalerweise über Transformatoren mit vorgegebenen Übertragungsverhältnissenan die Streckenkabel 17 bzw. 28 angeschlossen. Daher ist es erforderlich, Wechselrichter vorzusehen, die an die besonderen Erfordernisse der jeweiligen Trassenteile angepaßt sind und deren Leistung danach bemessen ist, ob in dem betroffenen Trassenteil eine ebene Beharrungsfahrt mit konstanter Geschwindigkeit, eine Beschleunigungsfahrt, eine Fahrt auf ansteigendem Gelände od. dgl. durchgeführt werden soll. Daher ist bisher entlang der gesamten Trasse eine Vielzahl unterschiedlicher Wechselrichter mit unterschiedlicher Leistung angeordnet.

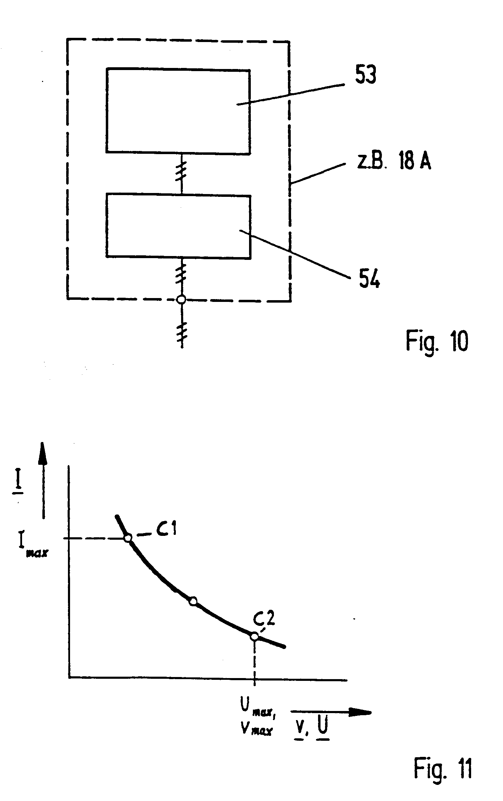

Erfindungsgemäß wird demgegenüber zur weiteren Kosteneinsparung vorgeschlagen, in den längs der Trasse angeordneten Unterwerkshälften, z.B. 18A (Fig. 10), im wesentlichen gleichartige Wechselrichter 53 bzw. aus mehreren gleichartigen Wechselrichtern bestehende Wechselrichtereinheiten vorzusehen und stattdessen die Übersetzungsverhältnisse der Transformatoren 54 unterschiedlich zu wählen. Dadurch sind zwar die in den Unterwerkshälften installierten Leistungen (P = UI) überall gleich, doch können je nach Bedarf unterschiedliche Maximalspannungen und Maximalströme zur Verfügung gestellt werden. In Fig. 11 ist schematisch die Abhängigkeit des Stroms I in Abhängigkeit von der Spannung am Ausgang des Transformators 54 dargestellt. Die Abhängigkeit des Stroms I von der Fahrzeuggeschwindigkeit $\underline{v}$ ist ganz ähnlich und daher nicht gesondert dargestellt. Dabei ermöglicht ein kleines Übersetzungsverhältnis, z.B. an einer Stelle C1, die Erzeugung hoher Ströme bei kleinen Spannungen. Ein solches Übersetzungsverhältnis kann beispielsweise für ein Trassenteil vorgesehen werden, in dem eine Beschleunigungsfahrt aus dem Stillstand heraus oder eine Steigung vorgesehen ist. Für derartige Beschleunigungsphasen reichen nämlich überwiegend geringe Maximalspannungen aus, weil die Geschwindigkeit des Fahrzeugs und daher auch die Polradspannung $U_P$ vergleichsweise klein ist. In dieser Phase kann daher ein vergrößerter Maximalstrom für die beim Beschleunigen erforderliche Schubkraft sorgen. Wechselt das Fahrzeug später in ein Trassenteil über, bei dem eine Fahrt mit Höchstgeschwindigkeit vorgesehen ist, kann dazu ein Transformator 54 mit einem hohen Übersetzungsverhältnis, z.B. entsprechend einer Stelle C2 in Fig. 11, verwendet werden, da bei einer Fahrt mit konstant hoher Geschwindigkeit die erforderlichen Ströme $I_S$ vergleichsweise gering sind, aber zu deren Erzeugung wegen der großen Polrad-Spannungen $U_P$ auch hohe Spannungen in den Unterwerkshälften benötigt werden. Denkbar wäre auch, die Unterwerkshälften mit Transformatoren 54 auszurüsten, die unterschiedliche Übersetzungsverhältnisse aufweisen, oder ein Trassenteil in mehrere Abschnitte zu unterteilen, denen je ein vorgewähltes Übersetzungsverhältnis fest zugeordnet ist, damit auch innerhalb eines Trassenteils den unterschiedlichen Erfordernissen Rechnung getragen werden kann. Mit $I_{max}$ und $U_{max}$ sind in Fig. 11 gleichzeitig die Strom- und Spannungsgrenzen des verwendeten Langstatorsystems (Wicklungskabel od. dgl.) angedeutet.

Die Erfindung bietet aufgrund der ortsabhängigen Stromaufteilung den besonderen Vorteil, daß zumindest bei einer der Unterwerkshälften 18A,B eine Stromreserve zur Verfügung steht. Bei der ortsabhängigen Strom- und Längenaufteilung nach Fig. 9 beispielsweise kann diejenige Unterwerkshälfte, die gerade 1/3 des Stroms $I_S$ in einen Wicklungsabschnitt liefert, theoretisch zur Lieferung eines Stroms von 2/3 • $I_S$ entsprechend dem anderen Teilstrom veranlaßt werden. Dies wird erfindungsgemäß dazu ausgenutzt, um in bestimmten unvorhergesehenen Störfällen einen zu starken Einbruch der auf das Fahrzeug 5 wirkenden Schubkraft zu vermeiden.

Fällt beispielsweise aufgrund einer Störung eine ganze Unterwerkshälfte, z.B. 18A, aus, dann wird erfindungsgemäß die beschriebene ortsabhängige Stromaufteilung aufgehoben, und die noch funktionsfähigen Unterwerkshälften 18B/24A/24B werden dazu veranlaßt, gleichzeitig den maximal möglichen Strom zu liefern, so daß in diesem Störfall immer noch die volle Nennleistung zur Verfügung stehen würde. Dies kann zwar erst nach einem gewissen Abfall der Fahrzeuggeschwindigkeit erreicht werden, da die Unterwerkshälften 18B/24A/24B für diese Wicklungsabschnitte an der Spannungsgrenze arbeiten und daher erst einen höheren Strom als den jeweiligen Nennstrom liefern können, wenn die Fahrzeuggeschwindigkeit und damit auch die Polradspannung $U_P$ entsprechend abgenommen hat. Dennoch ist aber der Verlust an Geschwindigkeit deutlich kleiner, als es der Fall wäre, wenn die drei noch funktionsfähigen Unterwerkshälften 18B/24A/24B nur jeweils 50 % des Stroms $I_S$ liefern könnten.

Bei Ausfall eines ganzen Unterwerks stehen noch insgesamt ca. 67 % statt nur 50 % der Nennleistung zur Aufrechterhaltung eines Notbetriebs zur Verfügung. Entsprechendes gilt, wenn eine Motorseite ausfällt. Ist dies in Fig. 2 die von den Unterwerkshälften 24A,B gespeiste Seite, dann können die beiden verbliebenen Unterwerkshälften 18A,B dazu veranlaßt werden, in Abhängigkeit von der geringer werdenden Fahrzeuggeschwindigkeit jeweils bis zu ca. 67 % des auf dieser Motorseite vorgesehenen Gesamtstroms $I_S$ zu liefern. Daher beträgt auch in diesem Fall der Einbruch an Schubkraft nicht 50 %, sondern nur ca. 33 %.

Für andere Störfälle gelten ähnliche Betrachtungen, so daß unabhängig vom Ort $\underline{x}$ des gerade befahrenen Wicklungsabschnitts jeweils die eine beteiligte Unterwerkshälfte an ihrer Stromgrenze gehalten oder auf diese umgeschaltet und die andere Unterwerkshälfte auf der Spannungsgrenze betrieben bzw. auf diese umgeschaltet wird. Befindet sich das Fahrzeug gerade in einem Betriebszustand, bei dem die Spannungsgrenze bei keiner Unterwerkshälfte erreicht ist, dann können unabhängig von der Fahrzeuggeschwindigkeit alle noch funktionsfähigen Unterwerkshälften ihre Maximalströme liefern.

Auf diese Weise lassen sich in Abhängigkeit von der jeweiligen Störsituation unterschiedliche Betriebszustände herstellen, die unter den gegebenen Bedingungen einen optimalen Notbetrieb des Fahrzeugs ermöglichen.

Zur Steuerung der verschiedenen Unterwerkshälften beim Auftreten eines Störfalls sieht die Erfindung nach Fig. 5 vor, dem Stromaufteilungsblock 35 über die Leitung 39 (Fig. 2) das von der Geschwindigkeit des Fahrzeugs 5 abhängige Signal und über einen weiteren Eingang 56 das von der Leitung 32 kommende Signal entsprechend dem jeweiligen Geschwindigkeit-Sollwert zuzuführen. Beide Signale werden einer Steuereinrichtung 57, z.B. einem Komparator od. dgl., zugeführt, die mit einem weiteren Eingang des Blocks 41 verbunden ist. Die Steuereinrichtung 57 gibt an ihrem Ausgang beispielsweise ein "0"-Signal ab, wenn die Istgeschwindigkeit der Sollgeschwindigkeit entspricht. Ist dagegen die Istgeschwindigkeit kleiner oder z.B. um einen gewissen Schwellwert kleiner als die Sollgeschwindigkeit, dann gibt die Steuereinrichtung beispielsweise ein "1"-Signal ab. Beim Erscheinen des "0"-Signals arbeitet der Block 41 auf die beschriebene Weise. Erscheint dagegen das "1"-Signal, wird der Block 41 unter Aufhebung der ortsabhängigen Stromaufteilung dazu veranlaßt, ein dem Wert 0.5 entsprechendes Signal abzugeben, so daß beide beteiligten Unterwerkshälften 18A,B bzw. 24A,B die ihnen zugeordneten Wechselrichter so einstellen, daß sie die Ströme $I_A = I_B$ einspeisen. Dabei könnten mit dem Block 41 weitere Blöcke 58 bzw. 59 verbunden sein, in denen einerseits die jeweils möglichen Störsituationen und andererseits die beim Auftreten einer dieser Störsituationen durchzuführenden Befehle gespeichert sind. Hierdurch wäre es möglich, mit Hilfe der Steuereinrichtung 57 und mit Hilfe von weiteren, nicht dargestellten, zu den Unterwerkshälften führenden Leitungen sicherzustellen, daß nicht nur die im Störfall erwünschte Stromaufteilung, z.B. $I_A = I_B$, hergestellt, sondern auch sichergestellt wird, daß die von den Unterwerkshälften abgegebenen Ströme und Spannungen je nach Bedarf an den Strom- bzw. Spannungsgrenzen gehalten oder auf diese eingestellt werden.

Eine besondere Störsituation ist durch einen außerplanmäßigen Halt des Fahrzeugs 5 gekennzeichnet. Für die in einem solchen Fall erforderliche Notbremsung werden beide Unterwerkshälften 18A,24A bzw. 18B,24B angewiesen, gleiche Ströme $I_A,I_B$ mit im Vergleich zum Normalbetrieb entgegengesetztem Vorzeichen einzuspeisen. Wie in den anderen beschriebenen Störfällen ist die Zufuhr der Bremsströme abhängig von der momentanan Geschwindigkeit des Fahrzeugs 5, so daß die maximalen Bremsströme $I_A = I_B = -2/3 \cdot I_s$ in der Regel erst erreichbar sind, nachdem die Fahrzeuggeschwindigkeit und damit auch die Polradspannung $U_P$ entsprechend abgenommen hat. Umgekehrt können in einer Beschleunigungsphase nach einem Nothalt alle beteiligten Unterwerke jeweils zunächst den maximalen Strom $I_A = I_B = 2/3 \cdot I_s$ einspeisen, solange die Polradspannung $U_P$ noch klein genug ist. Je nach erreichter Geschwindigkeit kann dann wieder auf die ortsabhängige Stromaufteilung umgeschaltet werden.

Die Erfindung ist nicht auf die beschriebenen Ausführungsbeispiele beschränkt, die sich auf vielfache Weise abwandeln lassen. Dies gilt insbesondere im Hinblick auf die beschriebene ortsabhängige Strom- und Längenaufteilung. Beide Parameter können in Abhängigkeit von den gestellten Anforderungen einzeln oder gemeinsam optimiert werden. Insbesondere kann die ortsabhängige Längenaufteilung für die verschiedenen Wicklungsabschnitte auch dort mit Vorteil angewendet werden, wo wie bisher eine Doppelspeisung mit $I_A = I_B = 0.5 \cdot I_S$ vorgesehen ist.

## Patentansprüche

1. Vorrichtung zum Betreiben eines Magnetfahrzeugs, insbesondere Magnetschwebefahrzeugs, mit einem synchronen Linearmotor, insbesondere Langstatormotor, der wenigstens eine längs eines Trassenteils (2) verlegte Langstatorwicklung (3), die in Längsrichtung des Trassenteils in unmittelbar aufeinanderfolgende Wicklungsabschnitte (3.11-3.19; 3.21-3.29) unterteilt ist, und einen Erreger (4) aufweist, der an einem längs des Trassenteils bewegten Fahrzeug (5) montiert ist, ferner mit wenigstens einem parallel zum Trassenteil verlaufenden Streckenkabel (17), mit Schalteinrichtungen (16) zum nacheinander erfolgenden Anschluß je eines ihnen zugeordneten Wicklungsabschnitts an das Streckenkabel und mit zwei mit den Enden des Streckenkabels verbundenen Unterwerkshälften (18A,18B; 24A,24B) zur Versorgung des jeweils an das Streckenkabel angeschlossenen Wicklungsabschnitts mit zwei Teilströmen ($I_A,I_B$), dadurch gekennzeichnet, daß das Verhältnis der von den beiden Unterwerkshälften (18A,B; 24A,B) zu liefernden Teilströme ($I_A, I_B$) in Abhängigkeit von den jeweiligen Betriebsbedingungen und/oder den Längen ($\underline{\ell}$) der von den Wicklungsabschnitten (3.11-3.19; 3.21-3.29) zu den Unterwerkshälften (18A,B; 24A,B) führenden Teile des Streckenkabels (17,28) unterschiedlich groß einstellbar ist.

2. Vorrichtung nach Anspruch 1, dadurch gekennzeichnet, daß beim Anschluß irgendeines Wicklungsabschnitts (3.11-3.19; 3.21-3.29) an das Streckenkabel (17,28) der von der näher gelegenen Unterwerkshälfte (z.B. 18A) gelieferte Teilstrom (z.B. $I_A$) größer als der von der ferner gelegenen Unterwerkshälfte (z.B. 18B) gelieferte Teilstrom ($I_B$) ist.

3. Vorrichtung nach Anspruch 1 oder 2, dadurch gekennzeichnet, daß bei einem Wicklungsabschnitt (z.B. 3.15), bei dem die Längen der zu den beiden Unterwerkshälften (18A,B; 24A,B) führenden Teile des Streckenkabels (17,28) gleich groß sind, die von beiden Unterwerkshälften (18A,B; 24A,B) zu liefernden Teilströme ($I_A$, $I_B$) gleich der Hälfte des für diesen Wicklungsabschnitt (z.B. 3.15) benötigten Gesamtstroms ($I_S$) sind.

4. Vorrichtung nach einem der Ansprüche 1 bis 3, dadurch gekennzeichnet, daß zumindest für den Nominalbetrieb die von den beiden Unterwerkshälften (18A,B; 24A,B) gelieferten Teilströme ($I_A$,$I_B$) entsprechend der Formel $I = (1-\ell/d) I_S$ gewählt sind, worin $\underline{d}$ die Länge des Streckenkabels (17,28), $I_S$ der durch den Wicklungsabschnitt fließende Gesamtstrom und $\underline{\ell}$ die Länge desjenigen Teils des Streckenkabels (17,28) ist, das den Wicklungsabschnitt mit der jeweiligen Unterwerkshälfte (18A,B; 24A,B) verbindet.

5. Vorrichtung nach Anspruch 4, dadurch gekennzeichnet, daß diese Formel nur für diejenigen Wicklungsabschnitte (z.B. 3.14-3.16) gilt, die in einem mittleren Bereich des Trassenteils liegen, während für alle übrigen Wicklungsabschnitte (3.11-3.13, 3.17-3.19) unabhängig von den Längen der zu den Unterwerkshälften führenden Teile der Streckenkabel (17,28) jeweils konstante Teilströme ($I_A$,$I_B$) vorgesehen sind, die kleiner als der Gesamtstrom ($I_S$) sind und bei denen das Verhältnis des von der näher gelegenen Unterwerkshälfte (z.B. 18A) gelieferten Teilstroms (z.B. $I_A$) zu dem von der ferner gelegenen Unterwerkshälfte (z.B. 18B) gelieferten Teilstrom (z.B. $I_B$) konstant und größer als Eins ist.

6. Vorrichtung nach Anspruch 5, dadurch gekennzeichnet, daß das konstante Verhältnis 2:1 beträgt.

7. Vorrichtung nach einem der Ansprüche 1 bis 6, dadurch gekennzeichnet, daß für den Nominalbetrieb zumindest die Längen der außerhalb des mittleren Bereichs des Trassenteils angeordneten Wicklungsabschnitte so gewählt sind (Fig. 9), daß für jeden dieser Wicklungsabschnitte (3.11-3.19; 3.21-3.29) die Summe aus der für ihn vorgesehenen nominalen Polradspannung, dem Spannungsabfall an seinen Wirk- und Blindwiderständen ($R_S$, $jX_S$) und demjenigen Spannungsabfall ($U_{ZA}$,$U_{ZB}$) im wesentlichen konstant ist, der durch den von ihm zur jeweils ferner liegenden Unterwerkshälfte führenden Teil des Streckenkabels (17,28) bedingt ist.

8. Vorrichtung nach einem der Ansprüche 1 bis 7, dadurch gekennzeichnet, daß jede Unterwerkshälfte (18A,B; 24A,B) eine Wechselrichtereinheit (53) und einen zwischen diesen und das zugehörige Ende des Streckenkabels (17,28) geschalteten Transformator (54) aufweist, dessen Übersetzungsverhältnis entsprechend den Erfordernissen des zugehörigen Trassenteils eingestellt ist.

9. Vorrichtung nach einem der Ansprüche 5 bis 8, dadurch gekennzeichnet, daß jeder Unterwerkshälfte (18A,B; 24A,B) eine Steuereinrichtung (57) zugeordnet ist, die beim Auftreten eines Störfalls jeweils die eine Unterwerkshälfte (z.B. 18A) auf den maximal erreichbaren Strom und die jeweils andere Unterwerkshälfte (z.B. 18B) auf die maximal erreichbare Spannung oder jeweils beide Unterwerkshälften (z.B. 18A,B) auf den maximal erreichbaren Strom einstellt.

**Claims**

1. Device for operating a magnetic vehicle, in particular a magnetic levitation vehicle, with a synchronous linear motor, in particular a long stator motor, comprising at least one long stator coil (3) which is laid along a line section (2) and divided in the longitudinal direction of the line section into directly succeeding coil sections (3.11-3.19, 3.21-3.29), and an exciter (4) which is mounted on a vehicle (5) moving along the line section, also with at least one line cable (17) extending parallel to the line section, with switching devices (16) for successive connection of one associated coil section to the line cable at a time, and with two substation halves (18A, 18B; 24A, 24B) connected to the ends of the line cable for supply of the coil section connected to the line cable at any given time with two partial currents ($I_A$, $I_B$), characterised in that the ratio of the partial currents ($I_A$, $I_B$) to be delivered by the two substation halves (18A,B; 24A,B) can be adjusted to different quantities as a function of the respective operating conditions and/or the lengths (*l*) of the portions of line cable (17, 28) leading from the coil sections (3.11-3.19; 3.21-3.29) to the substation halves (18A,B; 24A,B).

2. Device according to claim 1, characterised in that on connection of any coil section (3.11-3.19; 3.21-3.29) to the line cable (17, 28), the partial current (e.g. $I_A$) delivered by the closer substation half (e.g. 18A) is greater than the partial current ($I_B$) delivered by the further substation half (e.g. 18B).

3. Device according to claim 1 or 2, characterised in that in the case of a coil section (e.g. 3.15) in which the lengths of the portions of line cable (17, 28) leading to the two substation halves (18A,B; 24A,B) are of equal quantity, the partial currents ($I_A$, $I_B$) to be delivered by the two substation halves (18A,B; 24A,B) are equal to half the total current ($I_S$) needed for this coil section (e.g. 3.15).

4. Device according to any of claims 1 to 3, characterised in that at least for nominal operation the partial currents ($I_A$,$I_B$) delivered by the two substation halves (18A,B;24A,B) are selected according to the formula $I = (1 - l/d)\, I_S$, where d is the length of the line cable (17, 28), $I_S$ is the total current flowing through the coil section, and $l$ is the length of that portion of line cable (17, 28) which connects the coil section to the respective substation half (18A,B; 24A,B).

5. Device according to claim 4, characterised in that this formula applies only to those coil sections (e.g. 3.14-3.16) which are located in a central region of the line section, while for all other coil sections (3.11-3.13, 3.17-3.19), irrespective of the lengths of the portions of line cables (17, 28) leading to the substation halves, there are provided in each case constant partial currents ($I_A$, $I_B$) which are smaller than the total current ($I_S$) and in which the ratio of the partial current (e.g. $I_A$) delivered by the closer substation half (e.g. 18A) to the partial current (e.g. $I_B$) delivered by the further substation half (e.g. 18B) is constant and greater than unity.

6. Device according to claim 5, characterised in that the constant ratio is 2:1.

7. Device according to any of claims 1 to 6, characterised in that for nominal operation at least the lengths of the coil sections arranged outside the central region of the line section are selected in such a way (Fig. 9) that for each of these coil sections (3.11-3.19; 3.21-3.29) the sum of the nominal magnet wheel voltage provided for it, the voltage drop at its active resistance and reactive impedance ($R_S$, $jX_S$) and the voltage drop ($U_{ZA}$, $U_{ZB}$) which is determined by the portion of line cable (17, 28) leading from it to the further substation half, is essentially constant.

8. Device according to any of claims 1 to 7, characterised in that each substation half (18A,B; 24A,B) comprises an inverter unit (53) and a transformer (54) which is connected between the latter and the associated end of the line cable (17, 28) and of which the winding ratio is adjusted according to the requirements of the associated line section.

9. Device according to any of claims 5 to 8, characterised in that associated with each substation half (18A,B; 24A,B) is a control device (57) which, if a breakdown arises, adjusts one substation half (e.g. 18A) to the maximum obtainable current and the other substation half (e.g. 18B) to the maximum obtainable voltage or both substation halves (e.g. 18A,B) to the maximum obtainable current.

**Revendications**

1. Dispositif pour le fonctionnement d'un véhicule magnétique, un véhicule à sustentation magnétique en particulier, avec un moteur linéaire synchrone, un moteur à stator déployé notamment, qui présente un enroulement de stator (3), au moins, posé le long d'une section de tracé (2) et subdivisé, dans le sens longitudinal de la section de tracé, en sections d'enroulement (3.11-3.19, 3.21-3.29) directement successives, ainsi qu'un excitateur (4), monté sur un véhicule (5) déplacé le long de la section de tracé, avec un câble de ligne (17), au moins, parallèle à la section de tracé, avec des dispositifs de commutation (16) pour le raccordement successif d'une section d'enroulement, associée à ces dispositifs, au câble de ligne, et avec deux moitiés de sous-stations (18A, 18B; 24A, 24B), reliées aux extrémités du câble de ligne, pour l'alimentation en deux courants partiels ($I_A$, $I_B$) de la section d'enroulement, reliée au câble de ligne, caractérisé en ce que le rapport des courants partiels ($I_A$, $I_B$), à fournir par les deux moitiés de sous-stations (18A, B; 24A, B), peut être réglé à une valeur différente en fonction des conditions de service respectives et/ou des longueurs ($l$) des sections du câble de ligne (17, 28), menant des sections d'enroulement (3.11 - 3.19; 3.21 - 3.29) aux moitiés de sous-stations (18A,B; 24A,B).

2. Dispositif suivant la renvendication 1, caractérisé en ce que, lors du raccordement de n'importe quelle section d'enroulement (3.11 - 3.19; 3.21 - 3.29) au câble de ligne (17, 28), le courant partiel ($I_A$ par exemple), fourni par la moitié de sous-station la plus proche (18A, par exemple), est supérieur au courant partiel ($I_B$), fourni par la moitié de sous-station la plus éloignée (18B, par exemple).

**3.** Dispositif suivant l'une des revendications 1 et 2, caractérisé en ce que, avec une section d'enroulement (3.15, par exemple), pour laquelle les longueurs des sections du câble de ligne (17, 28), menant aux deux moitiés de sous-stations (18A,B; 24A,B), sont équivalentes, les courants partiels ($I_A$, $I_B$), à fournir par les deux moitiés de sous-stations (18A,B; 24A,B), sont égaux à la moitié du courant total ($I_S$), requis pour cette section d'enroulement (3.15, par exemple).

**4.** Dispositif suivant l'une quelconque des revendications 1 à 3, caractérisé en ce que, pour le régime nominal du moins, les courants partiels ($I_A$, $I_B$), fournis par les deux moitiés de sous-stations (18A,B; 24A,B), sont choisis d'après la formule $I = (1-l/d)I_S$, $\underline{d}$ représentant la longueur du câble de ligne (17, 28) $I_S$ le courant total passant au travers de la section d'enroulement, et $l$ la longueur de section du câble de ligne (17, 28), qui relie la section d'enroulement avec la moitié de sous-station respective (18A,B; 24A,B).

**5.** Dispositif suivant la revendication 4, caractérisé en ce que cette formule ne vaut que pour les sections d'enroulement (3.14 - 3.16, par exemple), situées dans une zone centrale de la section de tracé, tandis que des courants partiels ($I_A$, $I_B$), respectivement constants, sont prévus pour toutes les autres sections d'enroulement (3.11 -3.13, 3.17-3.19) indépendamment des longueurs des sections de câbles de ligne (17, 28), menant aux moitiés de sous-stations, ces courants étant inférieurs au courant total ($I_S$),et le rapport du courant partiel ($I_A$ par exemple), fourni par la moitié de sous-station la plus proche (18A, par exemple), sur le courant partiel ($I_B$ par exemple), fourni par la moitié de sous-station la plus éloignée (18B par exemple), étant constant et supérieur à un.

**6.** Dispositif suivant la revendication 5, caractérisé par un rapport constant de 2:1.

**7.** Dispositif suivant l'une quelconque des revendications 1 à 6, caractérisé en ce que, pour le régime nominal du moins, le choix des longueurs des sections d'enroulement, disposées à l'extérieur de la zone centrale de la section de tracé (figure 9), est tel que, pour chacune de ces sections d'enroulement (3.11-3.19; 3.21-3.29), la somme de la tension d'induit nominale, prévue pour la section, de la chute de tension liée à ses résistances effectives et réactances ($R_S,jX_S$), et de la chute de tension ($U_{ZA}$, $U_{ZB}$), due à la section du câble de ligne (17, 28), menant de la section d'enroulement à la moitié de sous-station respective la plus éloignée, est essentiellement constante.

**8.** Dispositif suivant l'une quelconque des revendications 1 à 7, caractérisé en ce que chaque moitié de sous-station (18A, B; 24A, B) présente un redresseur (53) et un transformateur (54), monté entre ce dernier et l'extrémité correspondante du câble de ligne (17, 28), et dont le rapport de transformation est réglé en fonction des exigences de la section de tracé correspondante.

**9.** Dispositif suivant l'une quelconque des revendications 5 à 8, caractérisé en ce qu'un dispositif de commande (57), associé à chaque moitié de sous-station (18A, B; 24A, B), règle, en cas de dysfonctionnement, la moitié de sous-station respective (18A par exemple) sur le courant maximal possible, et l'autre moitié de sous-station respective (18B par exemple) sur la tension maximale possible, ou les deux moitiés de sous-station respectives (18A,B par exemple) sur le courant maximal possible.

Fig. 1

Fig. 2

$jX_{ZA} + R_{ZA}$  $I_A$  $I_B$  $jX_{ZB} + R_{ZB}$

$U_{ZA}$  $U_{ZB}$

$jX_S + R_S$  $I_S$

$U_A$  $U_B$

$U_S$

$U_P$

Fig. 3

$j\overline{I}_B X_{ZB}$

$j\overline{I}_A X_{ZA}$  $I_B R_{ZB}$

$I_A R_{ZA}$  $j\overline{I}_S X_S$

$U_B$

$U_A$  $U_S$  $I_S R_S$

$U_P$

$I_S$

Fig. 4

14

Fig. 5

Fig. 6

Fig. 7

Fig. 8

Fig. 9

53

z.B. 18 A

54

Fig. 10

$I$

$I_{max}$

C1

C2

$U_{max,}$
$V_{max}$   $v, U$

Fig. 11

18